# EUROPEAN PATENT APPLICATION

(11) **EP 3 358 896 A1**
(43) Date of publication of application: **08.08.2018**
(21) Application number: 15905072.3
(22) Date of filing: 30.09.2015
(51) Int. Cl.: H04W 72/00

(54) **SCHEDULING INFORMATION DETERMINING DEVICE, AND SCHEDULING DEVICE, METHOD AND SYSTEM**

(71) Applicant: Fujitsu Limited, Kawasaki-shi, Kanagawa 211-8588 (JP)
(72) Inventor: WANG, Weiwei, Beijing 100025 (CN); WANG, Xin, Beijing 100025 (CN)
(74) Representative: Haseltine Lake LLP
(86) International application number: PCT/CN2015/091186
(87) International publication number: WO 2017/054160

(57) **Abstract**

Embodiments of this disclosure provide an apparatus for determining scheduling information, scheduling apparatus, a method and a system. The method includes: a UE determines a serving cell in a scheduled time slot according to scheduling information transmitted by an eNB. When the UE is configured with multiple intra-frequency cells, with the embodiments of this disclosure, the UE may learn a cell serving for it at a time slot.

## Description

### Field

This disclosure relates to the field of communications technologies, and in particular to an apparatus for determining scheduling information, a scheduling apparatus, a method and a system.

### Background

In order to increase a capacity of a hotspot area, the area may be served by multiple intra-frequency cells jointly. In such a scheme, a user equipment (UE) may possibly be served by different cells at different time slots. And as the different cells will serve for the UE by using different configuration (such as timing, and a position of a reference signal, etc.), the UE needs to learn a serving cell in each time slot.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In an existing mechanism, a terminal may be served by multiple inter-frequency cells at the same time, and in scheduling, an eNB may indicate via scheduling information a cell which serves for the user in a scheduled time slot. Hence, the existing mechanism is unable to support scheduling when the user is configured with multiple intra-frequency cells.

In order to solve the above problem, embodiments of this disclosure provide an apparatus for determining scheduling information, a scheduling apparatus, a method and a system.

According to a first aspect of the embodiments of this disclosure, there is provided an apparatus for determining scheduling information, applicable to a user equipment (UE), the UE being configured by an eNB with multiple intra-frequency cells jointly serving for the UE, the apparatus including:
a first determining unit configured to determine a serving cell in a scheduled time slot according to scheduling information transmitted by the eNB.

According to a second aspect of the embodiments of this disclosure, there is provided a scheduling apparatus, applicable to an eNB, the eNB configuring a UE with multiple intra-frequency cells jointly serving for the UE, the apparatus including:
a scheduling unit configured to transmit scheduling information to the UE, the scheduling information containing or not containing indication information on a serving cell in a scheduled time slot, so that the UE determines the serving cell in the scheduled time slot accordingly.

According to a third aspect of the embodiments of this disclosure, there is provided an apparatus for determining scheduling information, applicable to user equipment (UE), the UE being configured by an eNB with multiple intra-frequency cells jointly serving for the UE, the apparatus including:
a first determining unit configured to determine serving cells in time slots according to reference TDD configuration configured by the eNB for the UE.

According to a fourth aspect of the embodiments of this disclosure, there is provided a scheduling apparatus, applicable to an eNB, the eNB configuring a UE with multiple intra-frequency cells jointly serving for the UE, the apparatus including:
a configuring unit configured to configure the UE with reference TDD configuration, so that the UE determines serving cells in time slots according to the reference TDD configuration.

According to a fifth aspect of the embodiments of this disclosure, there is provided an apparatus for determining scheduling information, applicable to user equipment (UE), the UE being configured by an eNB with multiple intra-frequency cells jointly serving for the UE, the apparatus including:
a first determining unit configured to determine serving cells in time slots configured by the eNB for the UE according to a corresponding relationship between the time slots and serving cells.

According to a sixth aspect of the embodiments of this disclosure, there is provided a scheduling apparatus, applicable to an eNB, the eNB configuring a UE with multiple intra-frequency cells jointly serving for the UE, the apparatus including:
a configuring unit configured to configure the UE with a corresponding relationship between time slots and serving cells, so that the UE determines serving cells in time slots accordingly.

According to a seventh aspect of the embodiments of this disclosure, there is provided a UE, including the apparatus(es) as described in the first, the third and/or the fifth aspect(s).

According to an eighth aspect of the embodiments of this disclosure, there is provided an eNB, including the apparatus(es) as described in the second, the fourth and/or the fifth aspect(s).

According to a ninth aspect of the embodiments of this disclosure, there is provided a communications system, including the UE as described in the seventh aspect and the eNB as described in the eighth aspect.

According to a tenth aspect of the embodiments of this disclosure, there is provided a method for determining scheduling information, applicable to user equipment (UE), the UE being configured by an eNB with multiple intra-frequency cells jointly serving for the UE, the method including:
determining a serving cell in a scheduled time slot by the UE according to scheduling information transmitted by the eNB.

According to an eleventh aspect of the embodiments of this disclosure, there is provided a scheduling method, applicable to an eNB, the eNB configuring a UE with multiple intra-frequency cells jointly serving for the UE, the method including:
transmitting scheduling information by the eNB to the UE, the scheduling information containing or not containing indication information on a serving cell in a scheduled time slot, so that the UE determines the serving cell in the scheduled time slot accordingly.

According to a twelfth aspect of the embodiments of this disclosure, there is provided a method for determining scheduling information, applicable to user equipment (UE), the UE being configured by an eNB with multiple intra-frequency cells jointly serving for the UE, the method including:
determining serving cells in time slots by the UE according to reference TDD configuration configured by the eNB for the UE.

According to a thirteenth aspect of the embodiments of this disclosure, there is provided a scheduling method, applicable to an eNB, the eNB configuring a UE with multiple intra-frequency cells jointly serving for the UE, the method including:
configuring the UE by the eNB with reference TDD configuration, so that the UE determines serving cells in time slots according to the reference TDD configuration.

According to a fourteenth aspect of the embodiments of this disclosure, there is provided a method for determining scheduling information, applicable to user equipment (UE), the UE being configured by an eNB with multiple intra-frequency cells jointly serving for the UE, the method including:
determining, by the UE, serving cells in time slots configured by the eNB for the UE, according to a corresponding relationship between the time slots and serving cells.

According to a fifteenth aspect of the embodiments of this disclosure, there is provided a scheduling method, applicable to an eNB, the eNB configuring a UE with multiple intra-frequency cells jointly serving for the UE, the method including:
configuring the UE by the eNB with a corresponding relationship between time slots and serving cells, so that the UE determines serving cells in time slots accordingly.

An advantage of the embodiments of this disclosure exists in that when the UE is configured with multiple intra-frequency cells, with the embodiments of this disclosure, the UE may learn a cell serving for it at a time slot.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of cell aggregation;
FIG. 2 is a schematic diagram of a structure of one implementation of a scheduling apparatus of an embodiment;
FIG. 3 is a schematic diagram of a structure of another implementation of the scheduling apparatus of the embodiment;
FIG. 4 is a schematic diagram of a structure of a further implementation of the scheduling apparatus of the embodiment;
FIG. 5 is a schematic diagram of reference TDD configuration and TDD configuration of configured cells;
FIG. 6 is a schematic diagram of a structure of still another implementation of the scheduling apparatus of the embodiment;
FIG. 7 is a schematic diagram of a structure of yet another implementation of the scheduling apparatus of the embodiment;
FIG. 8 is a schematic diagram of a structure of yet still another implementation of the scheduling apparatus of the embodiment;
FIG. 9 is a flowchart of one implementation of a scheduling method of an embodiment;
FIG. 10 is a flowchart of another implementation of the scheduling method of the embodiment;
FIG. 11 is a flowchart of a further implementation of the scheduling method of the embodiment;
FIG. 12 is a flowchart of still another implementation of the scheduling method of the embodiment;
FIG. 13 is a flowchart of yet another implementation of the scheduling method of the embodiment;
FIG. 14 is a flowchart of yet still another implementation of the scheduling method of the embodiment;
FIG. 15 is a schematic diagram of a hardware structure of an eNB of an embodiment;
FIG. 16 is a schematic diagram of a hardware structure of a UE of an embodiment; and
FIG. 17 is a schematic diagram of a topology of the communications system of an embodiment.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various embodiments of this disclosure shall be described below with reference to the accompanying drawings. These embodiments are illustrative only, and are not intended to limit this disclosure.

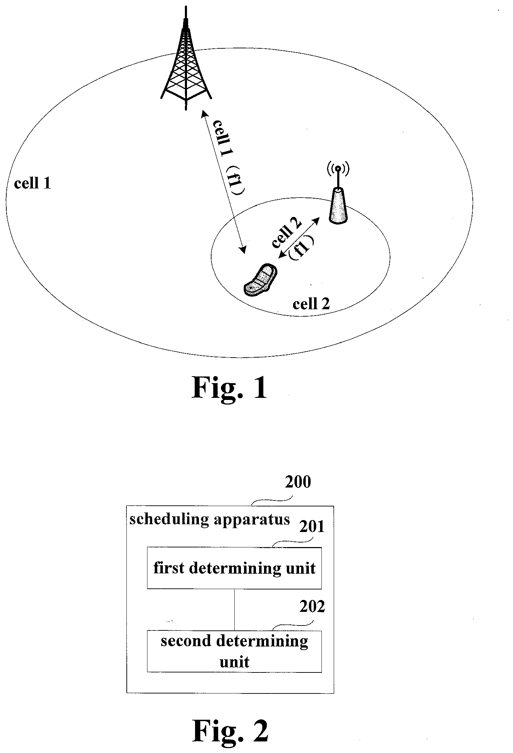

In the embodiments of this disclosure, cell aggregation refers to that a user is configured with multiple intra-frequency cells, and each user is able to learn TDD (time division duplexing) configuration of each configured cell, such configuration determining uplink/downlink settings of each time slot in the cell. FIG. 1 is a schematic diagram of cell aggregation. As shown in FIG. 1, user is configured with cell 1 and cell 2, both the cells operating at the same frequency, such as frequency 1. At different time slots, the user is served by cell 1, or is served by cell 2. When the user is served by one cell, it needs to be served according to configuration (such as timing information, and a position of a reference signal, etc.) of the cell, so as to ensure correct reception and transmission of data within the cell. Hence, the user needs to be able to determine a serving cell in each time slot.

In the embodiments of this disclosure, a serving cell identifies a transmission point (TP) or an eNB. And a serving cell may be denoted by a cell ID, or a TP ID, or an eNB ID, etc.

The embodiments of this disclosure shall be described below with reference to the accompanying drawings.

### Embodiment 1

The embodiment of this disclosure provides an apparatus for determining scheduling information, applicable to a user equipment (UE), the UE being configured by an eNB with multiple intra-frequency cells jointly serving for the UE. FIG. 2 is a schematic diagram of a structure of the apparatus. As shown in FIG. 2, the apparatus 200 includes a first determining unit 201 configured to determine a serving cell in a scheduled time slot according to scheduling information transmitted by the eNB.

In this embodiment, the eNB will transmit the scheduling information to the UE, and the UE may determine the serving cell in the scheduled time slot according to whether the scheduling information contains indication information on the serving cell in the scheduled time slot.

In one implementation, if the scheduling information does not contain the indication information on the serving cell in the scheduled time slot, the first determining unit 201 determines that the serving cell in the scheduled time slot is a default cell. In this implementation, the default cell may be preconfigured, such as being indicated when the eNB configures the UE with the multiple intra-frequency cells, or the default cell may be predefined, such as predefining a primary cell as a default serving cell.

In another implementation, if the scheduling information contains the indication information on the serving cell in the scheduled time slot, the first determining unit 201 determines that the serving cell in the scheduled time slot is a serving cell indicated by the indication information.

In a further implementation of this embodiment, as shown in FIG. 2, the apparatus 200 may further include a second determining unit 202 configured to determine a position of the scheduled time slot and uplink/downlink settings of the scheduled time slot according to the scheduling information or TDD configuration of the serving cell in the scheduled time slot.

In this embodiment, the position of the scheduled time slot may be determined according to a predefined timing relationship between a time slot receiving the scheduling information and the scheduled time slot. For example, if the scheduling information is received at a time slot n, the position of the scheduled time slot is at n+k; where, k is predefined, such as being determined according to the TDD configuration of the serving cell. Hence, the second determining unit 202 may determine the position of the scheduled time slot according to the reference TDD configuration.

In this embodiment, the position of the scheduled time slot may also be indicated by using the indication information in the scheduling information. Hence, the second determining unit 202 may determine the position of the scheduled time slot according to the scheduling information.

In this embodiment, the uplink/downlink settings of the scheduled time slot may be implicitly indicated, such as being determined according to a format of the scheduling information. Hence, the second determining unit 202 may determine the uplink/downlink settings of the scheduled time slot according to the format of the scheduling information.

In this embodiment, the uplink/downlink settings of the scheduled time slot may also be explicitly indicated, such as being indicated by using explicit scheduling indication information. Hence, the second determining unit 202 may also determine the uplink/downlink settings of the scheduled time slot according to the scheduling indication information.

For example, a UE is configured with intra-frequency cells, cell 1 and cell 2, cell 1 being configured as a default serving cell (such as a primary cell), and cell 2 being configured as a secondary cell. Cell 1 and cell may possibly have identical or different TDD configuration. If the scheduling information received by the UE contains no indication information on the serving cell, the first determining unit 201 may determine that the serving cell in the scheduled time slot is cell 1, and the second determining unit 202 may determine the position and the uplink/downlink settings of the scheduled time slot according to the TDD configuration of cell 1. And if the scheduling information received by the UE contains indication information on that the serving cell is cell 2, the first determining unit 201 may determine that the serving cell in the scheduled time slot is cell 2, and the second determining unit 202 may determine the position and the uplink/downlink settings of the scheduled time slot according to the TDD configuration of cell 2.

With the apparatus for determining scheduling information of this embodiment, the UE may determine the serving cell in the scheduled time slot according to whether the scheduling information contains the indication information indicating the serving cell in the scheduled time slot, thereby performing data reception and transmission at the time slot according to the TDD configuration of the serving cell in the scheduled time slot.

### Embodiment 2

The embodiment of this disclosure provides a scheduling apparatus, applicable to an eNB, which is processing at an eNB side corresponding to the apparatus in Embodiment 1, with contents identical to those in Embodiment 1 being not going to be described herein any further.

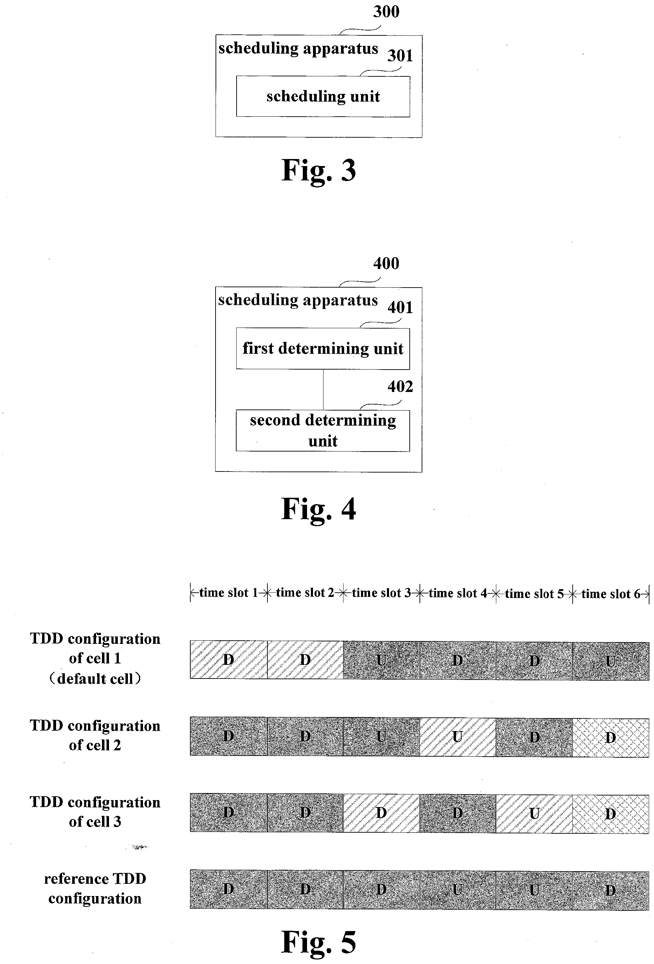

FIG. 3 is a schematic diagram of a structure of the scheduling apparatus. As shown in FIG. 3, the scheduling apparatus 300 includes a scheduling unit 301 configured to transmit scheduling information to the UE, the scheduling information containing or not containing indication information on a serving cell in a scheduled time slot, so that the UE determines the serving cell in the scheduled time slot accordingly. That is, the UE determines the serving cell in the scheduled time slot according to whether the scheduling information contains indication information on the serving cell in the scheduled time slot.

In this embodiment, if the scheduling information contains the indication information on the serving cell in the scheduled time slot, as described above, the UE may determine the serving cell in the scheduled time slot according to the indication information; and if the scheduling information does not contain the indication information on the serving cell in the scheduled time slot, as described above, the UE may deem that a default serving cell is the serving cell in the scheduled time slot.

In this embodiment, as described above, the eNB may further configure the UE with multiple intra-frequency cells as configured cells serving for the UE, and the eNB may indicate a default serving cell via configuration information.

In this embodiment, as described above, alternatively, the scheduling information may further contain indication information indicating a position of the scheduled time slot; alternatively, a format of the scheduling information may implicitly indicate uplink/downlink settings of the scheduled time slot; and alternatively, the scheduling information may further contain indication information indicating the uplink/downlink settings of the scheduled time slot.

With the scheduling apparatus of this embodiment, the UE may determine the serving cell in the scheduled time slot according to whether the scheduling information contains the indication information indicating the serving cell in the scheduled time slot, thereby performing data reception and transmission at the time slot according to the TDD configuration of the serving cell in the scheduled time slot.

### Embodiment 3

The embodiment of this disclosure provides an apparatus for determining scheduling information, applicable to a user equipment (UE), the UE being configured by an eNB with multiple intra-frequency cells jointly serving for the UE. FIG. 4 is a schematic diagram of a structure of the apparatus. As shown in FIG. 4, the apparatus 400 includes a first determining unit 401 configured to determine serving cells in time slots according to reference TDD configuration configured by the eNB for the UE.

In this embodiment, the eNB configures the reference TDD configuration for the UE, and the UE may determine the serving cells in the time slots according to the reference TDD configuration and TDD configuration of cells configured by the eNB for it.

In one implementation, for a time slot, if uplink/downlink settings of the time slot in the reference TDD configuration are only identical to uplink/downlink settings of the time slot in TDD configuration of a configured cell, the first determining unit 401 determines that the configured cell is the serving cell in the time slot.

In another implementation, for a time slot, if the uplink/downlink settings of the time slot in the reference TDD configuration are identical to uplink/downlink settings of the time slot in TDD configuration of at least two configured cells and are identical to uplink/downlink settings of the time slot in TDD configuration of a default cell, the first determining unit 401 determines that the default cell is the serving cell in the time slot.

In a further implementation, for a time slot, if the uplink/downlink settings of the time slot in the reference TDD configuration are identical to uplink/downlink settings of the time slot in TDD configuration of at least two configured cells and are different from uplink/downlink settings of the time slot in TDD configuration of a default cell, the first determining unit 401 determines that a cell designated by the eNB is the serving cell in the time slot.

In this embodiment, the above configured cells refer to the multiple intra-frequency cells configured by the eNB for the UE; furthermore, as described above, among the multiple configured cells configured by the eNB for the UE, one is a default cell. And as described above, the default cell may be preconfigured, or may be predefined.

FIG. 5 is a schematic diagram of reference TDD configuration and TDD configuration of the configured cells. As shown in FIG. 5, at time slot 1 and time slot 2, the reference TDD configuration is downlink (D), TDD configuration of cell 1, cell 2 and cell 3 is also downlink, and as cell 1 is a default cell, that is, at these time slots, uplink/downlink settings in TDD configuration of three configured cells, cell 1, cell 2 and cell 3, are identical to uplink/downlink settings in the reference TDD configuration, and uplink/downlink settings in the TDD configuration of default cell 1 are identical to the uplink/downlink settings in the reference TDD configuration, the first determining unit 401 determines that a serving cell in time slot 1 is the default cell, i.e., cell 1.

Still referring to FIG. 5, at time slot 3, the reference TDD configuration is downlink, TDD configuration of cell 3 is downlink, and TDD configuration of cell 1 and cell 2 is uplink (U), that is, at this time slot, uplink/downlink settings in the TDD configuration of only one cell, cell 3, are identical to the uplink/downlink settings in the reference TDD configuration, and the first determining unit 401 determines that a serving cell in time slot 3 is cell 3.

Still referring to FIG. 5, at time slot 4, the reference TDD configuration is uplink, TDD configuration of cell 1 and cell 3 is downlink, and TDD configuration of cell 2 is uplink, that is, at this time slot, uplink/downlink settings in the TDD configuration of only one cell, cell 2, are identical to the uplink/downlink settings in the reference TDD configuration, and the first determining unit 401 determines that a serving cell in time slot 4 is cell 2.

Still referring to FIG. 5, at time slot 5, the reference TDD configuration is uplink, TDD configuration of cell 1 and cell 2 is downlink, and TDD configuration of cell 3 is uplink, that is, at this time slot, uplink/downlink settings in the TDD configuration of only one cell, cell 3, are identical to the uplink/downlink settings in the reference TDD configuration, and the first determining unit 401 determines that a serving cell in time slot 5 is cell 3.

Still referring to FIG. 5, at time slot 6, the reference TDD configuration is downlink, TDD configuration of cell 1 is uplink, and TDD configuration of cell 2 and cell 3 is downlink, that is, at this time slot, uplink/downlink settings in the TDD configuration of two cells, cell 2 and cell 3, are identical to the uplink/downlink settings in the reference TDD configuration, but uplink/downlink settings in the TDD configuration of the default cell, cell 1, are different from the uplink/downlink settings in the reference TDD configuration, and the first determining unit 401 determines takes a serving cell designated by the eNB (cell 2 or cell 3) as a serving cell in time slot 6.

In another implementation of this embodiment, as shown in FIG. 4, the apparatus 400 may further include a second determining unit 402 configured to, after the UE receives scheduling information, determine a position of a scheduled time slot and uplink/downlink settings of the scheduled time slot according to the scheduling information or according to the reference TDD configuration, and determine a serving cell in the scheduled time slot according to the position of the scheduled time slot.

In this embodiment, the position of the scheduled time slot may be determined according to a predefined timing relationship between a time slot receiving the scheduling information and the scheduled time slot. For example, if the scheduling information is received at a time slot n, the position of the scheduled time slot is at n+k'; where, k' is predefined, such as being determined according to the configured reference TDD configuration. Hence, the second determining unit 402 may determine the position of the scheduled time slot according to the reference TDD configuration.

In this embodiment, the position of the scheduled time slot may also be indicated by using the indication information in the scheduling information. Hence, the second determining unit 402 may also determine the position of the scheduled time slot according to the scheduling information.

In this embodiment, the uplink/downlink settings of the scheduled time slot may be implicitly indicated, such as being determined according to a format of the scheduling information. Hence, the second determining unit 402 may determine the uplink/downlink settings of the scheduled time slot according to the format of the scheduling information.

In this embodiment, the uplink/downlink settings of the scheduled time slot may also be explicitly indicated, such as being indicated by using explicit scheduling indication information. Hence, the second determining unit 402 may also determine the uplink/downlink settings of the scheduled time slot according to the scheduling indication information.

With the apparatus for determining scheduling information of this embodiment, the UE may determine the serving cells in the time slots according to the reference TDD configuration configured by the eNB for it, so as to determine the serving cell in the scheduled time slot, thereby performing data reception and transmission at the time slot according to the TDD configuration of the serving cell in the scheduled time slot.

### Embodiment 4

The embodiment of this disclosure provides a scheduling apparatus, applicable to an eNB, which is processing at an eNB side corresponding to the apparatus in Embodiment 3, with contents identical to those in Embodiment 3 being not going to be described herein any further.

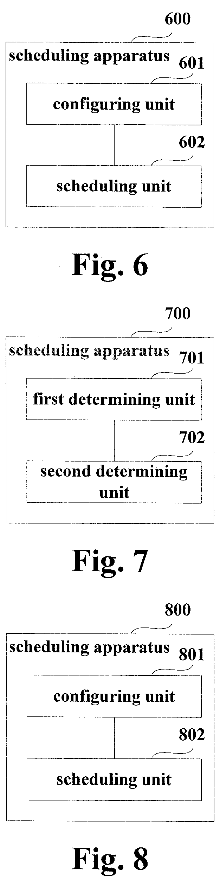

FIG. 6 is a schematic diagram of a structure of the scheduling apparatus. As shown in FIG. 6, the scheduling apparatus 600 includes a configuring unit 601 configured to configure a UE with reference TDD configuration, so that the UE determines serving cells in time slots according to the reference TDD configuration.

In this embodiment, as described above, the eNB may also configure the UE with multiple intra-frequency cells as configured cells serving for the UE, and the eNB may indicate a default serving cell via configuration information. Alternatively, the eNB may further designate one serving cell via the configuration information, as described above.

In this embodiment, as described above, TDD configuration of the configured cells is known to the UE, for example, the TDD configuration is preconfigured by the eNB. And the UE may determine serving cells in time slots according to the TDD configuration of the configured cells and the above reference TDD configuration.

In another implementation of this embodiment, as shown in FIG. 6, the scheduling apparatus 600 may further include a scheduling unit 602 configured to transmit scheduling information to the UE, so that the UE determines a position of a scheduled time slot and uplink/downlink settings of the scheduled time slot after receiving the scheduling information, and determines a serving cell in the scheduled time slot according to the position of the scheduled time slot. Details are as described above, and shall not be described here any further.

In this embodiment, as described above, alternatively, the scheduling information may further contain indication information indicating a position of the scheduled time slot; alternatively, a format of the scheduling information may further implicitly indicate uplink/downlink settings of the scheduled time slot; and alternatively, the scheduling information may further contain indication information indicating the uplink/downlink settings of the scheduled time slot.

With the scheduling apparatus of this embodiment, the UE may determine the serving cells in the time slots according to the reference TDD configuration configured by the eNB for it, so as to determine the serving cell in the scheduled time slot, thereby performing data reception and transmission at the scheduled time slot according to the TDD configuration of the serving cell in the scheduled time slot.

### Embodiment 5

The embodiment of this disclosure provides an apparatus for determining scheduling information, applicable to a user equipment (UE), the UE being configured by an eNB with multiple intra-frequency cells jointly serving for the UE. FIG. 7 is a schematic diagram of a structure of the apparatus. As shown in FIG. 7, the apparatus 700 includes a first determining unit 701 configured to determine serving cells in time slots according to a corresponding relationship between the time slots and serving cells configured by the eNB for the UE.

In this embodiment, the eNB may configure the UE with serving cells to which all time slots correspond, and may also configure the UE with serving cells to which a part of time slots correspond. For time slots for which the eNB does not configure with serving cells, serving cells to which they correspond are defaulted to default serving cells. And the UE may determine the serving cells in the time slots according to the corresponding relationship between the time slots and serving cells configured by the eNB for it.

In another implementation of this embodiment, as shown in FIG. 7, the apparatus 700 for determining scheduling information may further include a second determining unit 702 configured to, after the UE receives scheduling information, determine a position of a scheduled time slot and uplink/downlink settings of the scheduled time slot according to the scheduling information or according to reference TDD configuration configured by the eNB for the UE, and determine a serving cell in the scheduled time slot according to the position of the scheduled time slot.

In this implementation, the eNB may further configure the UE with the reference TDD configuration, hence, the second determining unit 702 may, after receiving the scheduling information, determine the position and uplink/downlink settings of the scheduled time slot according to the reference TDD configuration, so as to determine the serving cell in the scheduled time slot according to the position of the scheduled time slot.

In this implementation, the position of the scheduled time slot may be determined according to a predefined timing relationship between a time slot receiving the scheduling information and the scheduled time slot. For example, if the scheduling information is received at a time slot n, the position of the scheduled time slot is at n+k"; where, k" is predefined, such as being determined according to the configured reference TDD configuration. Hence, the second determining unit 702 may determine the position of the scheduled time slot according to the reference TDD configuration.

In this implementation, the position of the scheduled time slot may also be indicated by using the indication information in the scheduling information. Hence, the second determining unit 702 may also determine the position of the scheduled time slot according to the scheduling information.

In this implementation, the uplink/downlink settings of the scheduled time slot may be implicitly indicated, such as being determined according to a format of the scheduling information. Hence, the second determining unit 702 may determine the uplink/downlink settings of the scheduled time slot according to the format of the scheduling information.

In this implementation, the uplink/downlink settings of the scheduled time slot may also be explicitly indicated, such as being indicated by using explicit scheduling indication information. Hence, the second determining unit 702 may determine the uplink/downlink settings of the scheduled time slot according to the scheduling indication information.

With the apparatus for determining scheduling information of this embodiment, the UE may determine the serving cells in the time slots according to the configuration of the eNB, so as to determine the serving cell in the scheduled time slot according to the configured reference TDD configuration, thereby performing data reception and transmission at the time slot according to the TDD configuration of the serving cell in the scheduled time slot.

### Embodiment 6

The embodiment of this disclosure further provides a scheduling apparatus, applicable to an eNB, which is processing at an eNB side corresponding to the apparatus in Embodiment 5, with contents identical to those in Embodiment 5 being not going to be described herein any further.

FIG. 8 is a schematic diagram of a structure of the scheduling apparatus. As shown in FIG. 8, the scheduling apparatus 800 includes a configuring unit 801 configured to configure the UE with a corresponding relationship between time slots and serving cells, so that the UE determines serving cells in time slots accordingly.

In this embodiment, the eNB may configure the UE with serving cells to which all time slots correspond, and may also configure the UE with serving cells to which a part of time slots correspond. For time slots for which the eNB does not configure with serving cells, serving cells to which they correspond are defaulted to default serving cells. And the UE may determine the serving cells in the time slots according to the corresponding relationship between the time slots and serving cells configured by the eNB for it, with details being as described above.

In another implementation of this embodiment, the eNB may configure the UE with reference TDD configuration via the configuring unit 801. Hence, the UE may determine a position and uplink/downlink settings of the scheduled time slot according to the reference TDD configuration, and determine the serving cell in the scheduled time slot according to the position of the scheduled time slot.

In a further implementation of this embodiment, as shown in FIG. 8, the scheduling apparatus 800 may further include a scheduling unit 802 configured to transmit scheduling information to the UE, so that after receiving the scheduling information the UE determines the position of the scheduled time slot and the uplink/downlink settings of the scheduled time slot according to the scheduling information or according to the reference TDD configuration, and determines the serving cell in the scheduled time slot according to the position of the scheduled time slot.

In this embodiment, as described above, alternatively, the scheduling information may further contain indication information indicating a position of the scheduled time slot; alternatively, a format of the scheduling information may implicitly indicate uplink/downlink settings of the scheduled time slot; and alternatively, the scheduling information may further contain indication information indicating the uplink/downlink settings of the scheduled time slot.

With the scheduling apparatus of this embodiment, the UE may determine the serving cells in the time slots according to the configuration of the eNB, so as to determine the serving cell in the scheduled time slot according to the configured reference TDD configuration, thereby performing data reception and transmission at the time slot according to the TDD configuration of the serving cell in the scheduled time slot.

### Embodiment 7

The embodiment of this disclosure provides a method for determining scheduling information, applicable to a UE. As principles of the method are similar to that of the apparatus in Embodiment 1, the implantation of the apparatus in Embodiment 1 may be referred to for implementation of the method, with identical contents being not going to be described herein any further.

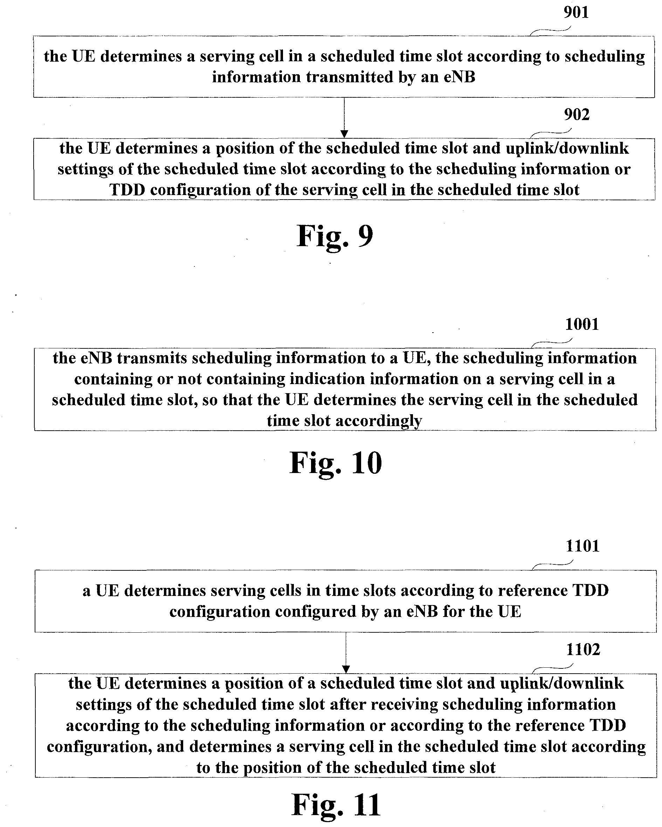

FIG. 9 is a flowchart of the method. As shown in FIG. 9, the method includes:
step 901: a UE determines a serving cell in a scheduled time slot according to scheduling information transmitted by an eNB.

In one implementation, if the scheduling information does not contain indication information on the serving cell in the scheduled time slot, the first determining unit determines that the serving cell in the scheduled time slot is a default cell. Here, the default cell is preconfigured or predefined.

In another implementation, if the scheduling information contains indication information on the serving cell in the scheduled time slot, the first determining unit determines that the serving cell in the scheduled time slot is a serving cell indicated by the indication information.

In a further implementation, as shown in FIG. 9, the method further includes:
step 902: the UE determines a position of the scheduled time slot and uplink/downlink settings of the scheduled time slot according to the scheduling information or TDD configuration of the serving cell in the scheduled time slot.

With the method for determining scheduling information of this embodiment, the UE may determine the serving cell in the scheduled time slot according to whether the scheduling information contains the indication information indicating the serving cell in the scheduled time slot, thereby performing data reception and transmission at the time slot according to the TDD configuration of the serving cell in the scheduled time slot.

### Embodiment 8

The embodiment of this disclosure provides a scheduling method, applicable to an eNB. As principles of the method are similar to that of the apparatus in Embodiment 2, the implantation of the apparatus in Embodiment 2 may be referred to for implementation of the method, with identical contents being not going to be described herein any further.

FIG. 10 is a flowchart of the method. As shown in FIG. 10, the method includes:
step 1001: an eNB transmits scheduling information to a UE, the scheduling information containing or not containing indication information on a serving cell in a scheduled time slot, so that the UE determines the serving cell in the scheduled time slot accordingly.

In this embodiment, the eNB transmits the scheduling information to the UE, the scheduling information containing the indication information indicating the serving cell in the scheduled time slot, or not containing such indication information.

With the method of this embodiment, the UE may determine the serving cell in the scheduled time slot according to whether the scheduling information contains the indication information indicating the serving cell in the scheduled time slot, thereby performing data reception and transmission at the time slot according to the TDD configuration of the serving cell in the scheduled time slot.

### Embodiment 9

The embodiment of this disclosure provides a method for determining scheduling information, applicable to a UE. As principles of the method are similar to that of the apparatus in Embodiment 3, the implantation of the apparatus in Embodiment 3 may be referred to for implementation of the method, with identical contents being not going to be described herein any further.

FIG. 11 is a flowchart of the method. As shown in FIG. 11, the method includes:
step 1101: a UE determines serving cells in time slots according to reference TDD configuration configured by an eNB for the UE.

In this embodiment, the eNB configures the UE with the reference TDD configuration, and the UE may determine the serving cells in the time slots according to the reference TDD configuration.

In one implementation, for a time slot, if uplink/downlink settings of the time slot in the reference TDD configuration are only identical to uplink/downlink settings of the time slot in TDD configuration of one configured cell, the UE determines that the configured cell is the serving cell in the time slot.

In another implementation, for a time slot, if the uplink/downlink settings of the time slot in the reference TDD configuration are identical to uplink/downlink settings of the time slot in TDD configuration of at least two configured cells and are identical to uplink/downlink settings of the time slot in TDD configuration of a default cell, the UE determines that the default cell is the serving cell in the time slot.

In a further implementation, for a time slot, if the uplink/downlink settings of the time slot in the reference TDD configuration are identical to uplink/downlink settings of the time slot in TDD configuration of at least two configured cells and are different from uplink/downlink settings of the time slot in TDD configuration of a default cell, the UE determines that a serving cell designated by the eNB is the serving cell in the time slot.

In this embodiment, the default cell may be preconfigured, or may be predefined.

In another implementation of this embodiment, as shown in FIG. 11, the method may further include:
step 1102: the UE determines a position of a scheduled time slot and uplink/downlink settings of the scheduled time slot after receiving scheduling information according to the scheduling information or according to the reference TDD configuration, and determines a serving cell in the scheduled time slot according to the position of the scheduled time slot.

With the method of this embodiment, the UE may determine the serving cells in the time slots according to the reference TDD configuration configured by the eNB for it, so as to determine the serving cell in the scheduled time slot, thereby performing data reception and transmission at the time slot according to the TDD configuration of the serving cell in the scheduled time slot.

### Embodiment 10

The embodiment of this disclosure provides a scheduling method, applicable to an eNB. As principles of the method are similar to that of the apparatus in Embodiment 4, the implantation of the apparatus in Embodiment 4 may be referred to for implementation of the method, with identical contents being not going to be described herein any further.

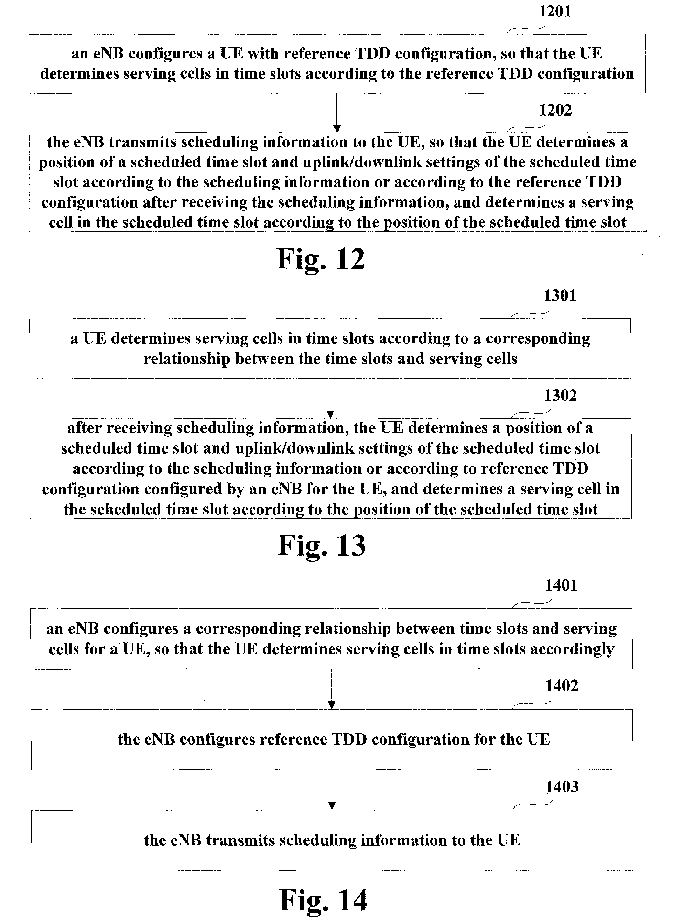

FIG. 12 is a flowchart of the method. As shown in FIG. 12, the method includes:
step 1201: an eNB configures a UE with reference TDD configuration, so that the UE determines serving cells in time slots according to the reference TDD configuration.

In this embodiment, the eNB may configure the UE with the reference TDD configuration, hence, the UE may determine the serving cells in the time slots according to the reference TDD configuration. And as described above, alternatively, the eNB may further designate a serving cell for the UE.

In another implementation of this embodiment, as shown in FIG. 12, the method may further include:
step 1202: the eNB transmits scheduling information to the UE, so that the UE determines a position of a scheduled time slot and uplink/downlink settings of the scheduled time slot according to the scheduling information or according to the reference TDD configuration after receiving the scheduling information, and determines a serving cell in the scheduled time slot according to the position of the scheduled time slot.

With the method of this embodiment, the UE may determine the serving cells in the time slots according to the reference TDD configuration configured by the eNB for it, so as to determine the serving cell in the scheduled time slot, thereby performing data reception and transmission at the time slot according to the TDD configuration of the serving cell in the scheduled time slot.

### Embodiment 11

The embodiment of this disclosure provides a method for determining scheduling information, applicable to a UE. As principles of the method are similar to that of the apparatus in Embodiment 5, the implantation of the apparatus in Embodiment 5 may be referred to for implementation of the method, with identical contents being not going to be described herein any further.

FIG. 13 is a flowchart of the method. As shown in FIG. 13, the method includes:
step 1301: a UE determines serving cells in time slots according to a corresponding relationship between the time slots and serving cells.

In this embodiment, an eNB may configure the UE with serving cells to which all time slots correspond, and may also configure the UE with serving cells to which a part of time slots correspond. For time slots for which the eNB does not configure with serving cells, serving cells to which they correspond are defaulted to default serving cells. And the UE may determine the serving cells in the time slots according to the corresponding relationship between the time slots and serving cells configured by the eNB for it, with details being as described above.

In another implementation of this embodiment, as shown in FIG. 13, the method may further include:
step 1302: after receiving scheduling information, the UE determines a position of a scheduled time slot and uplink/downlink settings of the scheduled time slot according to the scheduling information or according to reference TDD configuration configured by the eNB for the UE, and determines a serving cell in the scheduled time slot according to the position of the scheduled time slot.

In this implementation, the eNB may further configure the UE with the reference TDD configuration, hence, the UE may, after receiving the scheduling information, determine the position and uplink/downlink settings of the scheduled time slot according to the reference TDD configuration, so as to determine the serving cell in the scheduled time slot according to the position of the scheduled time slot.

With the method of this embodiment, the UE may determine the serving cells in the time slots according to the configuration of the eNB, so as to determine the serving cell in the scheduled time slot according to the configured reference TDD configuration, thereby performing data reception and transmission at the time slot according to the TDD configuration of the serving cell in the scheduled time slot.

### Embodiment 12

The embodiment of this disclosure further provides a scheduling method, applicable to an eNB. As principles of the method are similar to that of the apparatus in Embodiment 6, the implantation of the apparatus in Embodiment 6 may be referred to for implementation of the method, with identical contents being not going to be described herein any further.

FIG. 14 is a flowchart of the method. As shown in FIG. 14, the method includes:
step 1401: an eNB configures a corresponding relationship between time slots and serving cells for a UE, so that the UE determines serving cells in time slots accordingly.

In this embodiment, the eNB may configure the UE with serving cells to which all time slots correspond, and may also configure the UE with serving cells to which a part of time slots correspond. For time slots for which the eNB does not configure with serving cells, serving cells to which they correspond are defaulted to default serving cells. And the UE may determine the serving cells in the time slots according to the corresponding relationship between the time slots and serving cells configured by the eNB for it, with details being as described above.

In another implementation of this embodiment, as shown in FIG. 14, the method may further include:
step 1402: the eNB configures reference TDD configuration for the UE.

In this implementation, the eNB further configures the UE with the reference TDD configuration, hence, the UE may determine a position and uplink/downlink settings of the scheduled time slot, so as to determine a serving cell in the scheduled time slot, as described above.

In a further implementation of this embodiment, as shown in FIG. 14, the method may further include:
step 1403: the eNB transmits scheduling information to the UE, so that after receiving the scheduling information the UE determines the position of the scheduled time slot and the uplink/downlink settings of the scheduled time slot according to the scheduling information or according to the reference TDD configuration, and determines the serving cell in the scheduled time slot according to the position of the scheduled time slot.

In this embodiment, after the eNB transmits the scheduling information to the UE, the UE may determine the serving cell in the scheduled time slot according to the scheduling information or according to the above reference TDD configuration. In this implementation, step 1402 is optional.

With the method of this embodiment, the UE may determine the serving cells in the time slots according to the configuration of the eNB, so as to determine the serving cell in the scheduled time slot according to the configured reference TDD configuration, thereby performing data reception and transmission at the time slot according to the TDD configuration of the serving cell in the scheduled time slot.

### Embodiment 13

The embodiment of this disclosure provides an eNB, including the apparatus as described in Embodiment 2, or 4, or 6.

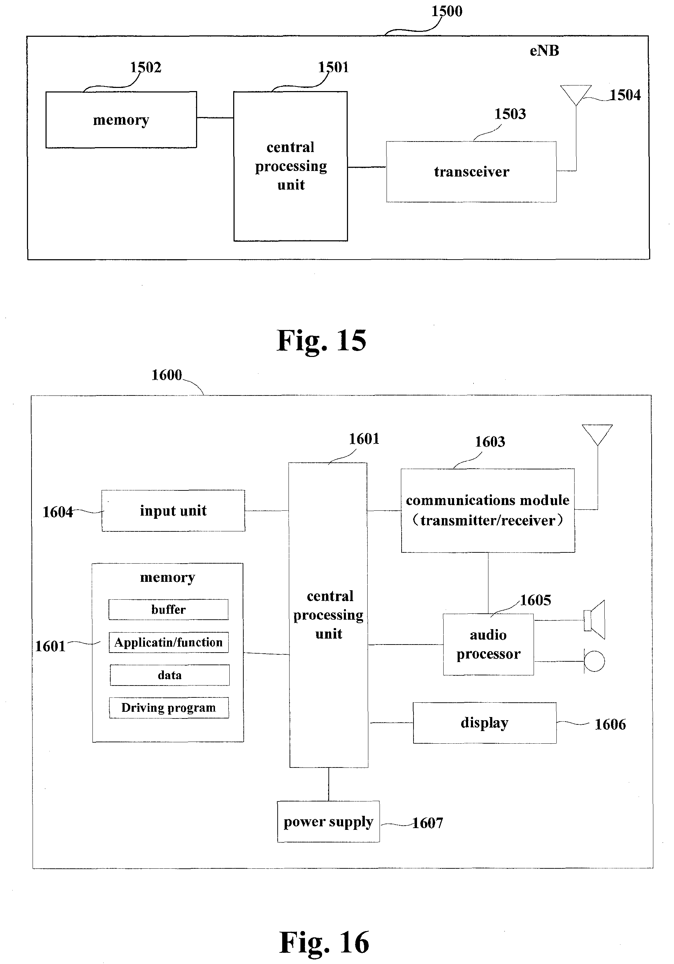

FIG. 15 is a schematic diagram of a structure of the eNB of the embodiment of this disclosure. As shown in FIG. 15, the eNB 1500 may include a central processing unit (CPU) 1501 and a memory 1502, the memory 1502 being coupled to the central processing unit 1501. In this embodiment, the memory 1502 may store various data, and furthermore, it may store a program for information processing, and execute the program under control of the central processing unit 1501, so as to receive various data transmitted by a UE, and transmit various data to the UE.

In one implementation, the functions of the apparatus described in Embodiment 2, or 4, or 6, may be integrated into the central processing unit 1501.

In another implementation, the apparatus described in Embodiment 2, or 4, or 6, and the central processing unit 1501, may be configured separately. For example, the apparatus described in Embodiment 2, or 4, or 6, may be configured as a chip connected to the central processing unit 1501, with its functions being realized under control of the central processing unit 1501.

Furthermore, as shown in FIG. 15, the eNB 1500 may include a transceiver 1503, and an antenna 1504, etc. In this embodiment, functions of the above components are similar to those in the relevant art, and shall not be described herein any further. It should be noted that the eNB 1500 does not necessarily include all the parts shown in FIG. 15, and furthermore, the eNB 1500 may include parts not shown in FIG. 15, and the relevant art may be referred to.

With the eNB of this embodiment, the UE may learn a serving cell providing services to it when it is scheduled at a time slot, thereby performing data reception and transmission according to the TDD configuration of the cell.

### Embodiment 14

The embodiment of this disclosure further provides a UE, including the apparatus described in Embodiment 1, or 3, or 5.

FIG. 16 is a block diagram of a systematic structure of the UE of the embodiment of this disclosure. As shown in FIG. 16, the UE 1600 may include a central processing unit 1601 and a memory 1602, the memory 1602 being coupled to the central processing unit 1601. It should be noted that this figure is illustrative only, and other types of structures may also be used, so as to supplement or replace this structure and achieve a telecommunications function or other functions.

In an implementation, the functions of the apparatus described in Embodiment 1, or 3, or 5, maybe integrated into the central processing unit 1601.

In another implementation, the apparatus described in Embodiment 1, or 3, or 5, and the central processing unit 1601, may be configured separately. For example, the apparatus described in Embodiment 1, or 3, or 5, may be configured as a chip connected to the central processing unit 1601, with its functions being realized under control of the central processing unit 1601.

As shown in FIG. 16, the UE 1600 may further include a communications module 1603, an input unit 1604, an audio processor 1605, a display 1606, and a power supply 1607. It should be noted that the UE 1600 does not necessarily include all the parts shown in FIG. 16, and furthermore, the UE 1600 may include parts not shown in FIG. 16, and the relevant art may be referred to.

As shown in FIG. 16, the central processing unit 1601 is sometimes referred to as a controller or control, which may include a microprocessor or other processor devices and/or logic devices, and the central processing unit 1601 receives input and controls operations of every components of the UE 1600.

In this embodiment, the memory 1602 may be, for example, one or more of a buffer memory, a flash memory, a hard drive, a mobile medium, a volatile memory, a nonvolatile memory, or other suitable devices. And the central processing unit 1601 may execute programs stored in the memory 1602, so as to realize information storage or processing, etc. Functions of other parts are similar to those of the relevant art, which shall not be described herein any further. The parts of the UE 1600 may be realized by specific hardware, firmware, software, or any combination thereof, without departing from the scope of the present disclosure.

With the UE of this embodiment, the UE may learn a serving cell providing services to it when it is scheduled at a time slot, thereby performing data reception and transmission according to the TDD configuration of the cell.

### Embodiment 15

The embodiment of this disclosure further provides a communications system, including the eNB described in Embodiment 13 and the UE described in Embodiment 14.

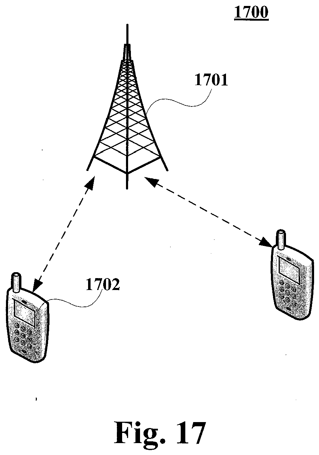

FIG. 17 is a schematic diagram of a structure of the communications system of the embodiment of this disclosure. As shown in FIG. 17, the communications system 1700 includes an eNB 1701 and UE 1702. In this embodiment, the eNB 1701 may be the eNB 1500 in Embodiment 13, and the UE 1702 may be the UE 1600 in Embodiment 14. As the eNB 1500 and the UE 1600 have been described in detail in these embodiments, the contents of them are incorporated herein, and shall not be described herein any further.

With the communications system of this embodiment, the UE may learn a serving cell providing services to it when it is scheduled at a time slot, thereby performing data reception and transmission according to the TDD configuration of the cell.

An embodiment of the present disclosure further provides a computer readable program, which, when executed in an information processing apparatus or UE, will cause a computer to carry out the method described in Embodiment 7, or 9, or 11, in the information processing apparatus or UE.

An embodiment of the present disclosure further provides a computer storage medium, including a computer readable program, which will cause a computer to carry out the method described in Embodiment 7, or 9, or 11, in an information processing apparatus or UE.

An embodiment of the present disclosure further provides a computer readable program, which, when executed in an information processing apparatus or eNB, will cause a computer to carry out the method described in Embodiment 8, or 10, or 12, in the information processing apparatus or eNB.

An embodiment of the present disclosure further provides a computer storage medium, including a computer readable program, which will cause a computer to carry out the method described in Embodiment 8, or 10, or 12, in an information processing apparatus or eNB.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An apparatus for determining scheduling information, applicable to a user equipment (UE), the UE being configured by an eNB with multiple intra-frequency cells jointly serving for the UE, the apparatus comprising:
a first determining unit configured to determine a serving cell in a scheduled time slot according to scheduling information transmitted by the eNB.

2. The apparatus according to claim 1, wherein if the scheduling information does not contain indication information on the serving cell in the scheduled time slot, the first determining unit determines that the serving cell in the scheduled time slot is a default cell.

3. The apparatus according to claim 2, wherein the default cell is preconfigured or predefined.

4. The apparatus according to claim 1, wherein if the scheduling information contains indication information on the serving cell in the scheduled time slot, the first determining unit determines that the serving cell in the scheduled time slot is a serving cell indicated by the indication information.

5. The apparatus according to claim 1, wherein the apparatus further comprises:
a second determining unit configured to determine a position of the scheduled time slot and uplink/downlink settings of the scheduled time slot according to the scheduling information or TDD configuration of the serving cell in the scheduled time slot.

6. A scheduling apparatus, applicable to an eNB, the eNB configuring a UE with multiple intra-frequency cells jointly serving for the UE, the apparatus comprising:
a scheduling unit configured to transmit scheduling information to the UE, the scheduling information containing or not containing indication information on a serving cell in a scheduled time slot, so that the UE determines the serving cell in the scheduled time slot accordingly.

7. An apparatus for determining scheduling information, applicable to a user equipment (UE), the UE being configured by an eNB with multiple intra-frequency cells jointly serving for the UE, the apparatus comprising:
a first determining unit configured to determine serving cells in time slots according to reference TDD configuration configured by the eNB for the UE.

8. The apparatus according to claim 7, wherein for a time slot, if uplink/downlink settings of the time slot in the reference TDD configuration are only identical to uplink/downlink settings of the time slot in TDD configuration of one configured cell, the first determining unit determines that the configured cell is the serving cell in the time slot.

9. The apparatus according to claim 7, wherein for a time slot, if the uplink/downlink settings of the time slot in the reference TDD configuration are identical to uplink/downlink settings of the time slot in TDD configuration of at least two configured cells and are identical to uplink/downlink settings of the time slot in TDD configuration of a default cell, the first determining unit determines that the default cell is the serving cell in the time slot.

10. The apparatus according to claim 9, wherein the default cell is preconfigured or predefined.

11. The apparatus according to claim 7, wherein for a time slot, if the uplink/downlink settings of the time slot in the reference TDD configuration are identical to uplink/downlink settings of the time slot in TDD configuration of at least two configured cells and are different from uplink/downlink settings of the time slot in TDD configuration of a default cell, the first determining unit determines that a serving cell designated by the eNB is the serving cell in the time slot.

12. The apparatus according to claim 11, wherein the default cell is preconfigured or predefined.

13. The apparatus according to claim 7, wherein the apparatus further comprises:
a second determining unit configured to, after the UE receives scheduling information, determine a position of a scheduled time slot and uplink/downlink settings of the scheduled time slot according to the scheduling information or according to the reference TDD configuration, and determine a serving cell in the scheduled time slot according to the position of the scheduled time slot.

14. A scheduling apparatus, applicable to an eNB, the eNB configuring a UE with multiple intra-frequency cells jointly serving for the UE, the apparatus comprising:
a configuring unit configured to configure the UE with reference TDD configuration, so that the UE determines serving cells in time slots according to the reference TDD configuration.

15. The apparatus according to claim 14, wherein the apparatus further comprises:
a scheduling unit configured to transmit scheduling information to the UE, so that the UE determines a position of a scheduled time slot and uplink/downlink settings of the scheduled time slot according to the scheduling information or according to the reference TDD configuration after receiving the scheduling information, and determines a serving cell in the scheduled time slot according to the position of the scheduled time slot.

16. An apparatus for determining scheduling information, applicable to a user equipment (UE), the UE being configured by an eNB with multiple intra-frequency cells jointly serving for the UE, the apparatus comprising:
a first determining unit configured to determine serving cells in time slots configured by the eNB for the UE according to a corresponding relationship between the time slots and serving cells.

17. The apparatus according to claim 16, wherein the apparatus further comprises:
a second determining unit configured to, after the UE receives scheduling information, determine a position of a scheduled time slot and uplink/downlink settings of the scheduled time slot according to the scheduling information or according to reference TDD configuration configured by the eNB for the UE, and determine a serving cell in the scheduled time slot according to the position of the scheduled time slot.

18. A scheduling apparatus, applicable to an eNB, the eNB configuring a UE with multiple intra-frequency cells jointly serving for the UE, the apparatus comprising:
a configuring unit configured to configure the UE with a corresponding relationship between time slots and serving cells, so that the UE determines serving cells in time slots accordingly.

19. The apparatus according to claim 18, wherein the apparatus further comprises:
a scheduling unit configured to transmit scheduling information to the UE, so that the UE determines a position of a scheduled time slot and uplink/downlink settings of the scheduled time slot according to the scheduling information, and determines a serving cell in the scheduled time slot according to the position of the scheduled time slot.

20. The apparatus according to claim 19, wherein,
the configuring unit further configures the UE with reference TDD configuration, so that the UE determines the position of the scheduled time slot and the uplink/downlink setting of the scheduled time slot according to the scheduling information or according to the reference TDD configuration after receiving the scheduling information, and determines the serving cell in the scheduled time slot according to the position of the scheduled time slot.
